# FASCICULE DE BREVET EUROPEEN

(11) **EP 0 788 707 B1**
(45) Date de publication et mention de la délivrance du brevet: **09.02.2000**
(21) Numéro de dépôt: 93924686.4
(22) Date de dépôt: 10.11.1993
(51) Int. Cl.: H04M 11/02

(54) **SYSTEME DE COMMANDE A DISTANCE D'OUVERTURE DE PORTE AU MOYEN D'UN POSTE TELEPHONIQUE**
FERNSTEUERUNG ZUM ÖFFNEN EINER TÜR MITTELS EINES TELEFONS
REMOTE CONTROL DOOR OPENING SYSTEM EMPLOYING A TELEPHONE

(30) Priorité: 19.11.1992 FR 9214131
(43) Date de publication de la demande: 13.08.1997
(73) Titulaire: DIESE TELECOM S.A., 92220 Bagneux (FR)
(72) Inventeur: Vanypre, Alain, 06800 Cagnes sur Mer (FR)
(74) Mandataire: Bonneau, Gérard
(86) Numéro de dépôt international: FR9301100
(87) Numéro de publication internationale: WO9411982

(56) Documents cités:
- EP-A- 0 454 421
- WO-A-88/02968
- FR-A- 2 612 671
- US-A- 3 484 561
- US-A- 4 588 861

## Description

### Domaine technique

La présente invention concerne les systèmes de commande à distance d'ouverture de porte, et en particulier un système de commande permettant l'ouverture d'une porte d'un bâtiment ou d'une habitation à partir d'un poste téléphonique intérieur du type comportant un dispositif de commande connecté au parlophone situé à l'extérieur, et permettant l'activation de la gâche électrique de la porte à partir du poste téléphonique.

### Etat de la technique antérieure

Les immeubles modernes sont généralement munis de portes fermées empêchant l'entrée de tout intrus, et dont l'ouverture peut être commandée à l'aide d'un parlophone. Lorsque quelqu'un à l'extérieur du bâtiment appuie sur le bouton d'appel d'un occupant de l'immeuble, un signal tel qu'une sonnerie avertit la personne demandée qui peut entrer en communication avec le visiteur à l'aide d'une liaison similaire à une liaison téléphonique. Si la personne demandée accepte de recevoir le visiteur, elle a à sa disposition un bouton de commande permettant l'activation à distance de la gâche électrique de la porte.

Ce système présente l'inconvénient pour l'occupant de l'immeuble qui est appelé d'avoir à se déplacer vers le lieu où se trouve l'appareil permettant d'entrer en communication avec le visiteur se trouvant à l'extérieur. Généralement, cet appareil étant généralement situé à l'entrée de l'appartement ou de l'habitation.

Bien que cet inconvénient soit mineur pour une personne apte à se déplacer facilement, il devient majeur lorsque la personne appelée est un handicapé physique qui a du mal à se déplacer ou qui ne peut pas se déplacer.

Il existait donc un besoin de disposer d'une commande à distance de l'ouverture de la porte, située à proximité de la personne appelée ou à sa disposition à tout moment. C'est ce qui a été réalisé dans le document WO-A-8802968 qui décrit un système de commande à distance de l'ouverture de porte au moyen d'un poste téléphonique. Ce système comprend un dispositif de commande connecté d'une part à un parlophone se trouvant à l'extérieur d'un bâtiment muni d'une porte dont l'ouverture est provoquée par l'activation d'une gâche électrique, le parlophone comporte un bouton d'appel, un micro et un haut-parieur et le dispositif de commande est connecté à un poste téléphonique à l'intérieur du bâtiment et comprend un moyen de signalisation pour activer la sonnerie du poste téléphonique lorsque quelqu'un appuie sur le bouton d'appel du parlophone, un moyen de communication pour assurer la liaison téléphonique entre le poste téléphonique d'une part, et le micro et le hautparleur du parlophone d'autre part, et un moyen d'actionnement activé par une touche du poste téléphonique pour actionner à distance la gâche électrique permettant d'ouvrir la porte d'entrée.

Malheureusement, le système ci-dessus est loin d'être sûr dans la mesure où n'importe quel intrus et en particulier un cambrioleur peut se faire ouvrir la porte du bâtiment on se faisant passer pour un autre, par exemple un livreur, un visiteur ou un occupant de l'immeuble qui a oublié se clé.

### Exposé de l'invention

Le but de l'invention est donc de fournir un système de commande à distance de l'ouverture d'une porte d'immeuble collectif ou individuel, évitant au maximum de se déplacer pour procéder à son activation tout en permettant de voir la personne qui demande l'ouverture de la porte sur un écran de poste de télévision

Par conséquent, l'objet de l'invention est un système de commande du type ci-dessus comprenant un dispositif de commande connecté à au moins un poste téléphonique à l'intérieur d'une habitation, comprenant un moyen de signalisation pour activer la sonnerie du poste téléphonique lorsque quelqu'un appuie sur le bouton d'appel du parlophone situé à l'extérieur, un moyen de communication pour assurer la liaison téléphonique entre le poste téléphonique d'une part et le micro et le haut parleur du parlophone d'autre part, et un moyen de commande activé par une touche du poste téléphonique pour commander à distance la gâche électrique permettant d'ouvrir la porte d'entrée. Le parlophone comprend en outre un dispositif de prise de vues connecté à la prise péritel d'un poste de télévision se trouvant à l'intérieur de l'habitation de manière à ce que l'image d'un visiteur appuyant sur le bouton d'appel soit affichée automatiquement sur l'écran dudit poste de télévision, après que le dispositif de commande a effectué la commutation du poste de télévision sur la prise péritel et la connexion entre le poste téléphonique et le parlophone, suite à la détection par le dispositif de commande de l'enfoncement du bouton d'appel.

Une autre caractéristique de l'invention est l'utilisation d'un poste téléphonique portatif. Le possesseur d'un tel poste portatif l'ayant toujours à portée de la main, le système de l'invention permet de dialoguer avec le visiteur et d'activer à distance la gâche électrique de la porte. Le système de l'invention utilisant un poste téléphonique portatif est donc particulièrement adapté pour les personnes handicapées physiques.

Encore une autre caractéristique de l'invention est de permettre à l'abonné de programmer à l'avance un numéro d'abonné auquel seront renvoyés les appels de visiteurs se présentant à la porte d'entrée de son habitation

### Brève description des figures

Les buts, objets et caractéristiques de l'invention seront mieux compris à la lecture de la description qui suit, faite en référence aux dessins dans lesquels:
la figure 1 est une représentation schématique du système de commande selon l'invention,
la figure 2 est une représentation synoptique du dispositif électronique de commande utilisé dans un mode de réalisation préféré de l'invention, et
la figure 3 est une représentation synoptique d'un second mode de réalisation du système de commande de l'invention.

### Description détaillée de l'invention

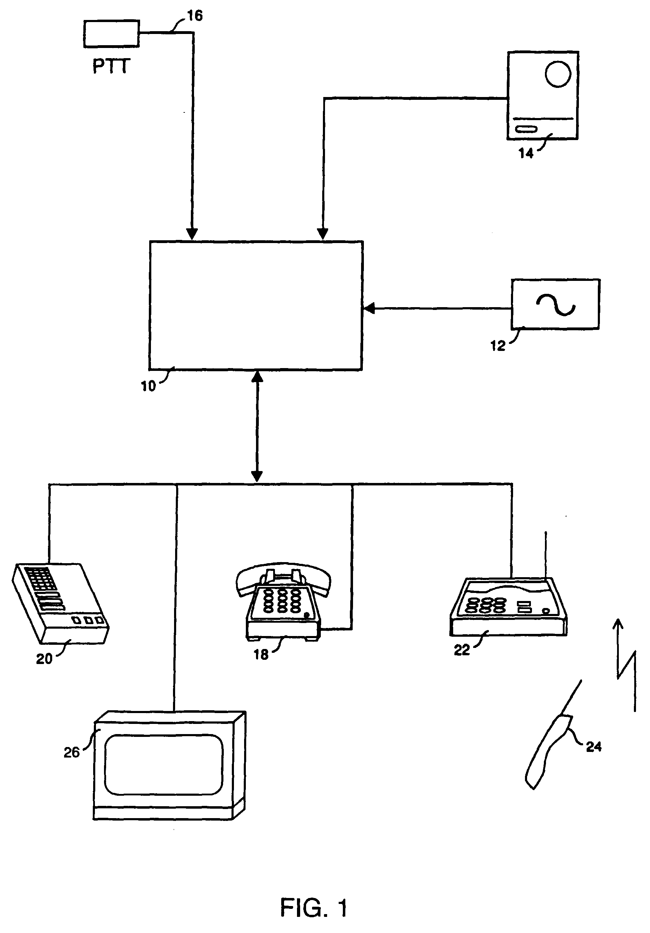

Comme illustré sur la figure 1, le système de commande selon l'invention comprend un dispositif électronique de commande 10 alimenté par la tension secteur 12 et connecté au parlophone 14 du bâtiment. Le parlophone 14 situé à l'extérieur du bâtiment comporte évidemment un bouton d'appel, un micro et un haut parleur.

Le dispositif de commande peut être connecté à une ligne téléphonique 16, mais ceci n'est pas obligatoire dans l'invention.

A l'intérieur du bâtiment, le dispositif de commande 10 est connecté à au moins un poste téléphonique 18. Il peut également être connecté à un répondeur téléphonique 20, et à un poste téléphonique portatif 22 disposant de son combiné sans fils 24. Il est à noter qu'il ne pourrait y avoir que le poste téléphonique 18 ou que le poste portatif 22 ou bien les deux pour la réalisation de l'invention. En outre, dans un mode de réalisation particulier, le dispositif de commande est également connecté à un poste de télévision 26 par l'intermédiaire d'une prise péritel.

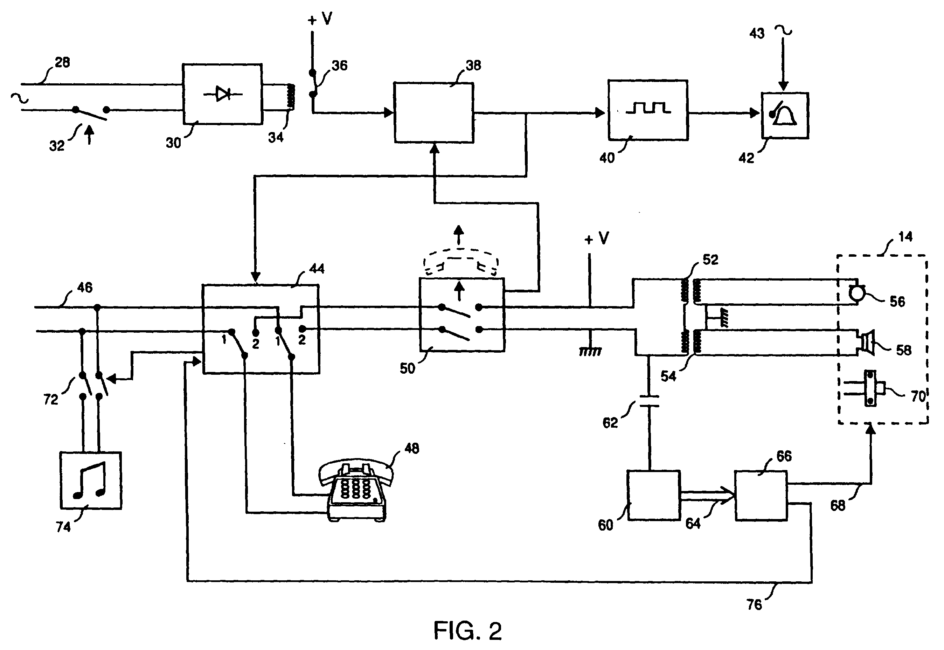

La figure 2 représente de façon synoptique un premier mode de réalisation du système de commande selon l'invention. L'alimentation électrique 28 du dispositif de commande est une tension de 12 volts alternative qui équipe normalement tout parlophone et qui est issue de la tension alternative du secteur de 220 volts. Cette tension est appliquée à un circuit redresseur 30 (par exemple un pont de diodes), lorsque l'interrupteur 32 est fermé par l'enfoncement du bouton d'appel du parlophone. Il est à noter que le circuit redresseur 30 n'est pas nécessaire au cas où une source de tension continue de 12 volts est directement utilisée.

Le courant continu obtenu à la sortie du circuit redresseur 30 lorsque le bouton d'appel 32 est enfoncé alimente le relais 34 qui vient fermer le contact 36. Une tension continue +V (généralement 30 volts) est alors appliquée à un circuit temporisateur 38 qui peut être du type à capacité réservoir ou de tout autre type, pendant une durée d'approximativement 20s. La sortie du circuit temporisateur 38 active un cadenceur ou multivibrateur 40 fournissant un signal en créneaux dont les parties hautes ont une durée d'environ 2,5s et les paries basses un durée de 1,5s. La sortie du cadenceur 40 sert à activer un circuit de signalisation 42 tel qu'une sonnerie ou un autre dispositif musical alimenté par une source de tension alternative 43 de 48 ou 70 volts. Ainsi, le circuit de signalisation 42 fonctionne pendant des périodes de 2,5s à intervalles de 1,5s. Il est à noter que grâce au temporisateur 38, le signal de sonnerie intermittent aura une durée totale de 20s quoique l'enfoncement du bouton d'appel 32 ne dure que 2 à 3 secondes.

Il faut préciser que le circuit de signalisation 42 est dans une réalisation préférée de l'invention la sonnerie d'un poste téléphonique alimentée généralement en 48 ou 70 volts alternatifs, mais peut être tout autre circuit de sonnerie ou circuit musical.

La sortie du circuit temporisateur 38 active également un commutateur de ligne à deux positions 44. Ce commutateur de ligne, par exemple un double relais représenté schématiquement par un double interrupteur, est normalement au repos en position 1, c'est à dire qu'il assure la liaison entre une ligne téléphonique 46 et un poste téléphonique 48. Lorsque le commutateur de ligne 44 est activé par la sortie du temporisateur 38, il passe en position 2. La personne appelée, suite à la sonnerie produite par le circuit de signalisation 42, soulève alors le combiné de son poste téléphonique pour pouvoir dialoguer avec le visiteur. Le soulèvement du combiné a pour effet de fermer le double commutateur 50, et également d'envoyer un signal de restauration au temporisateur 38 (décharge brusque de la capacité réservoir) ce qui arrête l'envoi du signal au circuit de signalisation 42 et stoppe la sonnerie.

Lorsque le double commutateur 50 est fermé, le poste téléphonique 48 est en liaison avec le parlophone 14. par l'intermédiaire des deux transformateurs 52 et 54 dont les primaires sont en série. Le premier transformateur 52 a son secondaire en série avec le micro 56 du parlophone 14 et le deuxième transformateur 54 a son secondaire en série avec le haut parleur 58 du parlophone 14. Le circuit reliant les primaires des transformateurs 52 et 54 via le double commutateur 50 et le commutateur de ligne 44 au poste téléphonique 48 est connecté à la source de tension continue + V, de préférence 30 volts, équivalente à la tension continue alimentant les lignes téléphoniques du réseau public.

La personne appelée peut donc dialoguer avec le visiteur à l'extérieur du bâtiment de la même façon qu'avec un correspondant sur la ligne téléphonique. Si la personne appelée décide d'ouvrir la porte au visiteur, il lui suffit d'appuyer sur une touche de son poste téléphonique, par exemple la touche #. Une combinaison de deux fréquences est transmise au décodeur DTMF (Dual Tone Multi Frequency) 60 par l'intermédiaire du condensateur de découplage 62. Le décodeur DTMF 60 fournit alors un mot de 4 bits sur la sortie bus 64 au décodeur-sélecteur 66. Ce dernier produit alors un signal d'activation sur se sortie 68 à destination de la gâche électrique 70 du parlophone 14.

Lorsque le commutateur de ligne 44 commute de se première à se deuxième position, il envoie un signal de commande de fermeture au double contact 72. La fermeture du contact 72 permet d'envoyer un signal d'attente sur la ligne téléphonique 46 pendant tout le temps où le commutateur de ligne 44 est sur se position 2 pour faire patienter un éventuel correspondant. Ce signal peut être fourni par un diffuseur musical 74 ou par toute autre source d'attente.

Lorsque les opérations d'ouverture de porte sont terminées, ou lorsque la personne appelée s'est débarrassée du visiteur importun sans ouvrir la porte, il est possible pour la personne appelée de reprendre la conversation interrompue avec la ligne téléphonique 46. Pour ce faire, il suffit d'appuyer sur une autre touche du poste téléphonique, par exemple la touche * pour transmettre une combinaison de deux fréquences décodée par le décodeur 60 en un nouveau mot de 4 bits sur la ligne bus 64, qui permet la sélection, grâce au décodeur-sélectionneur 66, de sélectionner la ligne 76. Le signal transmis alors sur la ligne 76 refait passer le commutateur de ligne 44 de la deuxième à la première position. Cette commutation peut d'ailleurs être temporaire dans le cas où la personne appelée demande au visiteur de patienter le temps de finir la conversation téléphonique. Dans ce cas, la connexion avec le parlophone se fait en appuyant sur une autre touche du poste téléphonique.

Du fait que le décodeur DTMF 60 fournit des mots de 4 bits, il est possible de prévoir jusqu'à 16 lignes en sortie du codeur-sélecteur 66 sélectionnées grâce à des touches différentes du poste téléphonique 48. Ainsi, il est possible de prévoir une touche sélectionnant l'allumage de l'éclairage, une autre sélectionnant l'appel de l'ascenseur, une autre sélectionnant une alarme etc...

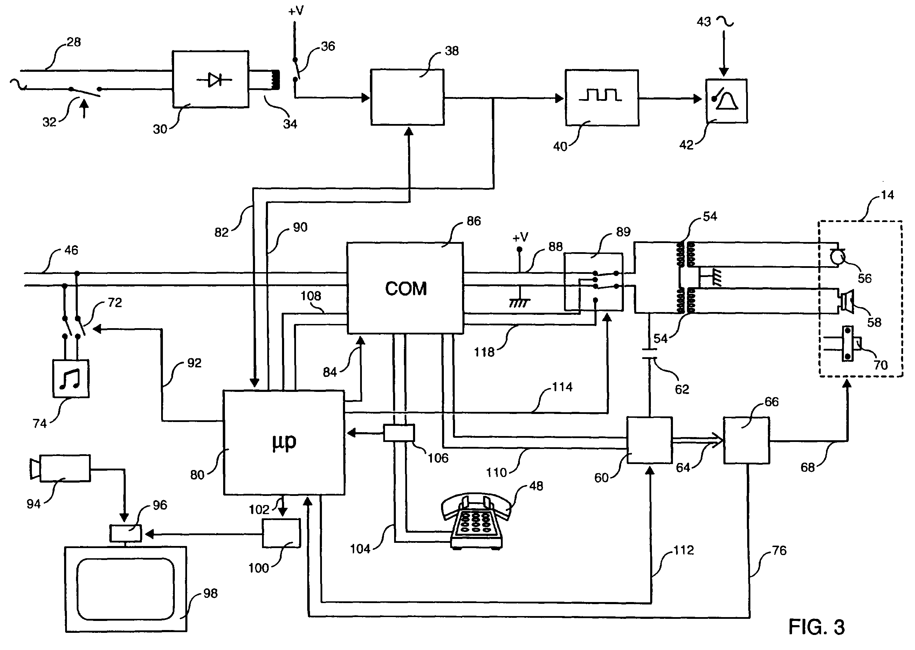

Le système de la figure 2 peut être grandement amélioré comme c'est le cas dans le mode de réalisation décrit en référence à la figure 3. Dans ce mode de réalisation, le dispositif de commande comprend un microprocesseur 80 permettant de mettre en oeuvre des fonctions plus élaborées.

Lorsqu'un visiteur appuie sur le bouton d'appel de la porte, tout se passe comme il a été décrit en référence à la figure 2 en ce qui concerne la mise en action de la sonnerie 42 et il est inutile d'y revenir. La sortie du temporisateur 38 est connectée par la ligne 82 au microprocesseur 80 qui est alors averti qu'un visiteur se trouve à la porte d'entrée. Le microprocesseur transmet un signal de commande sur la ligne 84 au commutateur 86 de façon à connecter la ligne 88 en provenance du parlophone 14 au poste téléphonique 48, par l'intermédiaire du commutateur 89 en position de repos. De la même façon que précédemment, une communication est donc établie entre le poste téléphonique 48 et le micro 56 et le haut-parleur 58 du parlophone grâce à la mise sous tension +V de la ligne 88. En même temps que l'établissement de la communication entre le poste téléphonique et le visiteur, le microprocesseur envoie un signal de restauration sur la ligne 90 au temporisateur 38 pour stopper la sonnerie 42, et envoie un signal de commande sur la ligne 92 pour fermer le contact 72 et transmettre un signal d'attente, par exemple musical par le diffuseur 74, sur la ligne téléphonique de façon à faire patienter un éventuel correspondant avec lequel la personne appelée était en conversation.

On doit noter qu'à la fin de la conversation entre la personne visitée et le visiteur, l'appui sur une touche spéciale du poste téléphonique permet, par l'intermédiaire du décodeur 60 et du décodeur-sélecteur 66, de transmettre un signal sur la ligne 76 pour avertir le microprocesseur qu'il doit commander la commutation du poste téléphonique 48 sur la ligne téléphonique 46 en envoyant un signal de commande sur la ligne de commande 84.

L'ouverture de la porte se réalise de la même façon que dans le mode de réalisation de la figure 1 au moyen du décodeur DTMF 60 et du décodeur-sélecteur 66 et ne sera donc pas expliqué en détail de nouveau.

Dans ce mode de réalisation, le parlophone 14 dispose en plus d'une caméra vidéo connectée en permanence à la prise péritel 96 du poste de télévision 96 de la personne visitée. La commande de connexion du poste sur la prise péritel se fait au moyen du circuit de commande vidéo 100 (application d'une tension de 8 volts sur le fil de commande péritel). En supposant que la personne visitée soit en train de regarder une émission télévisée au moment où le visiteur appuie sur le bouton d'appel, le microprocesseur 80, à l'instant où il est averti de cet appel parlophone au moyen de la ligne 82, envoie un signal de commande au circuit de commande vidéo 100 par la ligne de commande 102, et le circuit 100 commute le poste de télévision sur la prise péritel 96. Ainsi, la personne visitée voit apparaître directement le visiteur ou simplement son visage sur l'écran du poste de télévision.

Ce mode de réalisation utilisant une caméra vidéo, joue le rôle d'un moniteur de surveillance permettant d'éviter les intrus ou autres quémandeurs. La personne appelée voit immédiatement son visiteur sur l'écran en même temps qu'elle est avertie par la sonnerie 42. Elle est donc en mesure de ne décrocher son combiné téléphonique pour engager la conversation avec le visiteur qu'après l'avoir visionné et/ou identifié, et même de ne pas décrocher son combiné si elle ne veut pas dialoguer avec le visiteur qu'elle juge être un intrus. En outre, bien que non représenté, on peut imaginer que le circuit de commande vidéo 100 mette en route un magnétoscope enregistrant les images reçues par la prise péritel lorsque le poste de télévision 98 n'est pas en fonctionnement. Il suffit alors à l'occupant du lieu de visionner la cassette d'enregistrement de son magnétoscope pour savoir qui lui a rendu visite pendant son absence, de la même façon qu'un répondeur téléphonique enregistre les appels téléphoniques.

Une autre fonction mise en oeuvre dans le mode de réalisation de la figure 3 est le renvoi d'appel programmé. Pour ce faire, le poste téléphonique relié au commutateur 86 par la ligne 104, dispose à sa sortie d'un opto-coupleur 106 chargé de détecter le décrochage (ou le raccrochage) du combiné du poste 48. L'opto-coupleur 106 est connecté au microprocesseur 80. A chaque fois que l'abonné décroche son combiné téléphonique, le microprocesseur fait courir un temps d'environ 2 à 3 secondes pendant lequel il se met en mode programmation, tout en commandant, par la ligne de commande 84, au commutateur 86 de connecter la ligne 104 du poste téléphonique sur la ligne 108 aboutissant au microprocesseur. L'abonné a, durant cet intervalle de temps, la possibilité d'initialiser l'envoi d'un numéro vers lequel il désire que tout appel portier soit dirigé. Ce numéro est alors converti directement par le microprocesseur (disposant d'un convertisseur de fréquences en données numériques) et emmagasiné en mémoire, avant que le microprocesseur commande au commutateur 86 la connexion du poste téléphonique sur la ligne 46. On doit noter que, durant la programmation d'un numéro de renvoi d'appel à partir du poste téléphonique, la tension d'alimentation est fournie par la tension (30 volts) alimentant le microprocesseur (non représentée).

Lorsqu'ensuite, un visiteur appuie sur le bouton d'appel 32, le microprocesseur averti par la ligne 82, commande, par la ligne de commande 84, au commutateur 86 de connecter le décodeur DTMF 60 sur la ligne 46 du réseau téléphonique au moyen de la ligne 110 en même temps qu'il transmet le numéro emmagasiné en mémoire, au moyen de la ligne de commande 112, au décodeur 60 pour que ce dernier transmette la combinaison de fréquences correspondant au numéro au numéro mémorisé. Ainsi, l'appel portier est transféré vers un numéro d'abonné programmé dans la mémoire du microprocesseur à la convenance de l'abonné.

Lorsque la liaison est établie avec le numéro qui était dans la mémoire du microprocesseur, ce dernier commande, par la ligne de commande 114, au commutateur 89 de se mettre dans sa deuxième position connectant le parlophone à la ligne 118, en même temps qu'il commande, par la ligne de commande 84, au commutateur 86 de connecter la ligne 118 à la ligne téléphonique 46. Cette commutation a pour but de mettre hors circuit la tension +V alimentant la ligne 88, la tension d'alimentation étant maintenant fournie par le réseau.

Le renvoi d'appel, déclenché par le microprocesseur à la détection de l'enfoncement du bouton d'appel du parlophone, n'a pas lieu lorsqu'un appel téléphonique parvient à l'abonné par la ligne 46. En outre, si le bouton d'appel est enfoncé alors que l'abonné est en communication avec l'extérieur, cet appel ne peut pas être renvoyé sur le numéro programmé dans le microprocesseur puisque la ligne est occupée. Dans ce cas, le microprocesseur, averti de cet appel. soit émet un bip sonore alertant l'abonné, soit transmet au moyen d'un couplage (non représenté) sur la ligne 104 du poste téléphonique, un signal qui avertit l'abonné qu'un visiteur se trouve au parlophone.

Ce mode de fonctionnement permettant à une personne disposant du système de l'invention de transférer tout appel portier vers un autre numéro d'abonné, se justifie lorsque l'abonné ne veut pas être importuné par un visiteur, ou en cas d'absence dans le but de laisser croire que l'habitation est occupée ou fournir des informations à un visiteur attendu.

Dans le mode de réalisation représenté sur la figure 3, le commutateur 86 peut être réalisé simplement à l'aide de plusieurs relais. Un seul des relais est fermé à la fois pour connecter l'une des lignes 46, 88, 104, 108, 110 à une autre de ces mêmes lignes déterminée de la façon décrite en référence à la figure 3, lesdits relais étant commandés à tour de rôle par le microprocesseur au moyen de la ligne de commande 84.

Il est à noter que le système de l'invention n'est pas nécessairement connecté à la ligne téléphonique. Dans le cas où cette connexion n'existe pas, il suffit de court-circuiter la ligne 46 représentée sur les figures 2 et 3.

On notera que la mise en oeuvre de l'invention ne nécessite pas un abonnement spécifique pour la connexion au réseau téléphonique public, et il n'est pas nécessaire de disposer d'un réseau téléphonique du type "intercom" pour installer le système puisque celui-ci dispose de sa propre alimentation.

Une autre caractéristique essentielle de l'invention est de disposer d'un poste téléphonique 48 portatif. Dans ce cas, le combiné sans fils est gardé à proximité de la main et permet à un handicapé moteur de ne pas avoir à se déplacer pour ouvrir la porte et faire entrer un visiteur. Même si le possesseur de l'appareil n'est pas handicapé moteur, le système de l'invention présente un grand intérêt pour lui dans la mesure où il peut se déplacer et se trouver même en dehors de son appartement pour pouvoir encore ouvrir la porte à distance.

Comme on l'a mentionné précédemment, plus d'un poste téléphonique peut être connecté sur la ligne téléphonique comme c'est de plus en plus courant. En dehors du poste portatif comme décrit ci-dessus, un des postes téléphoniques peut être un répondeur enregistreur. Ainsi, en l'absence de la personne appelée, le visiteur peut toujours laisser un message sur le répondeur de la même façon que lors d'un appel téléphonique.

Bien entendu, le système de l'invention trouve application aussi bien pour l'ouverture de la porte d'entrée d'un immeuble que celle d'une villa, ou bien encore directement à l'entrée d'un appartement, ou toute sorte de bâtiment tel qu'une maison de retraite ou autre administration, ou généralement tout endroit où le portail sert de contrôle d'accès.

## Revendications

1. Système de commande à distance de l'ouverture de porte au moyen d'un poste téléphonique (48), comprenant un dispositif électronique de commande (10) connecté d'une part à un parlophone (14) se trouvant à l'extérieur d'un bâtiment ou d'une habitation muni d'une porte dont l'ouverture est provoquée par l'activation d'une gâche électrique (70), ledit parlophone comportant un bouton d'appel (32), un micro (56) et un haut parleur (58); ledit dispositif de commande étant connecté à au moins un poste téléphonique (18) à l'intérieur du bâtiment ou de l'habitation et comprenant un moyen de signalisation (38, 40) pour activer la sonnerie (42) du poste téléphonique lorsque quelqu'un appuie sur le bouton d'appel dudit parlophone, un moyen de communication (44, 50 ou 86, 89) pour assurer une liaison téléphonique entre le poste téléphonique d'une part, et le micro et le haut parleur dudit parlophone d'autre part, et un moyen d'actionnement (60, 66) activé par une touche dudit poste téléphonique pour actionner à distance la gâche électrique (70) permettant d'ouvrir la porte d'entrée ;
ledit système étant caractérisé en ce que ledit parlophone comprend en outre un dispositif de prise de vues (94) connecté à la prise péritel (96) d'un poste de télévision (98) se trouvant à l'intérieur de l'habitation de manière à ce que l'image d'un visiteur appuyant sur ledit bouton d'appel soit affichée automatiquement sur l'écran dudit poste de télévision, après que ledit dispositif de commande a effectué la commutation dudit poste de télévision sur la prise péritel et la connexion entre ledit poste téléphonique et ledit parlophone, suite à la détection par ledit dispositif de commande de l'enfoncement dudit bouton d'appel.

2. Système de commande selon la revendication 1 caractérisé en ce que ledit dispositif de commande (10) comprend un diffuseur de signal d'attente (74) du type diffuseur musical connecté à la ligne téléphonique par l'intermédiaire d'un interrupteur d'attente (72) dont la fermeture est activée à la suit de l'enfoncement dudit bouton d'appel (32) de la porte, de manière à mettre un éventuel correspondant téléphonique en attente pendant les opérations d'ouverture de ladite porte.

3. Système de commande selon la revendication 1 ou 2 caractérisé en ce que ledit poste téléphonique est un poste téléphonique portatif (22) de manière à ce que les opérations d'ouverture de ladite porte puissent être effectuées à distance sans avoir à se déplacer et donc à la portée de tout handicapé moteur.

4. Système de commande selon l'une des revendications 1 à 3 caractérisé en ce que ledit poste téléphonique (18 ou 48) comporte une touche pouvant être actionnée pour commander de nouveau la liaison avec la ligne téléphonique au cas où celle-ci était en attente.

5. Système de commande selon l'une des revendications 1 à 4 caractérisé en ce que ledit dispositif de commande (10) est connecté à une ligne téléphonique extérieure (16, 46) et comprend un commutateur de ligne à deux positions (44), la première position dite de repos, assurant la liaison entre la ligne téléphonique et au moins un poste téléphonique (48), et la deuxième position assurant la liaison entre ledit parlophone (14) et ledit poste téléphonique; ladite deuxième position étant activée en réponse à la détection de l'enfoncement du bouton d'appel (32) dudit parlophone.

6. Système selon la revendication 1 à 4 caractérisé en ce que ledit dispositif de commande (10) comprend un microprocesseur (80) comportant en mémoire un numéro de renvoi d'appel de manière à ce que, lorsque ledit bouton d'appel (32) est enfoncé, ledit microprocesseur commande la connexion dudit parlophone (14) sur la ligne (46) du réseau téléphonique grâce à des moyens de commutation (86, 89).

7. système selon la revendication 6 caractérisé en ce que la mise en mémoire dudit numéro de renvoi d'appel est effectuée à partir dudit poste téléphonique (48) par la connexion dudit poste téléphonique audit microprocesseur (80) pendant un temps déterminé au décrochage dudit poste.

## Claims

1. A remote control system for opening a door by using a telephone set (48), including an electronic control device (10) connected, on the one hand, to an entry-phone (14) located outside of a building or a house having a door which is opened upon activation of an electric strike (70), said entry-phone having a call button (32), a microphone (56) and a speaker (58); said control device being connected to at least one telephone set (18) within the building or house and including a signalling means (38, 40) for activating the bell (42) of the telephone set when someone presses the call button of said entry-phone, a communication means (44, 50 or 86, 89) for ensuring a telephone link between the telephone set on the one hand, and the microphone and speaker of said entry-phone on the other hand, and a triggering means (60, 66) activated by a key on said telephone set for remotely activating the electric strike (70) enabling the door to be opened;
said system being characterized in that said entry-phone further includes a camera (94) connected to the "péritel" socket (EIA multiport connector) (96) of a television set (98) located within the house so that the picture of a visitor pressing said call button is automatically displayed on the screen of said television set, after said control device has performed the switching of said television set through the "péritel" socket and the connection of said telephone set and said entry-phone, further to the detection by said control device of the depression of said call button.

2. The control system according to claim 1 characterized in that said control device (10) includes an 〈〈con hold〉〉 sound diffuser (74) the type of which is a music diffuser connected to the telephone line through an 〈〈on hold〉〉 switch (72) the closing of which is activated further to depression of said call button (32) for opening the door, so that a possible telephone party is put on hold until said door is opened.

3. The control system according to claim 1 or 2 characterized in that said telephone set is a portable telephone set (22) so that said door can be opened remotely without anybody being required to move, thus enabling individuals with reduced mobility to perform such a door opening.

4. The control system according to any one of claims 1 to 3 characterized in that said telephone set (18 or 48) includes a key that can be actuated to resume the telephone conversation if the call was placed on hold.

5. The control system according to any one of claims 1 to 4 characterized in that said control device (10) is connected to an external telephone line (16, 46) and includes a two-way line switch (14), the first position, known as rest position, ensuring the link between the telephone line and at least one telephone set (48), and the second position ensuring the link between said entry-phone (14) and said telephone set; said second position being actuated in response to the detection of the depression of call button (32) on said entry-phone.

6. The system according to any one of claims 1 to 4 characterized in that said control device (10) includes a microprocessor (80) with a call forwarding number in memory so that, when said call button (32) is depressed, said microprocessor connects said entry-phone (14) to the line (46) of the telephone network through switching means (86, 89).

7. The system according to claim 6 characterized in that storing in memory of said call forwarding number is performed from telephone set (48) through the connection of said telephone set to said microprocessor (80) for a time period determined when said telephone set is picked up.

## Patentansprüche

1. System zur Fernsteuerung der Öffnung einer Tür mit Hilfe eines Fernsprechgeräts (48) mit einer elektronischen Steuervorrichtung (10), die einerseits an eine Sprecheinrichtung (14) angeschlossen ist, die sich außerhalb eines Gebäudes oder einer Wohnung befindet, das bzw. die mit einer Tür versehen ist, deren Öffnung durch Aktivierung eines elektrischen Türöffners (70) bewirkt wird, wobei die Sprecheinrichtung einen Rufknopf (32), ein Mikrophon (56) und einen Lautsprecher (58) aufweist, wobei die Steuervorrichtung an mindestens ein Fernsprechgerät (18) im Inneren des Gebäudes oder der Wohnung angeschlossen ist und folgendes besitzt: eine Signalgebungseinrichtung (38, 40) zum Aktivieren der Klingel (42) des Fernsprechgeräts, wenn jemand auf den Rufknopf der Sprecheinrichtung drückt, eine Verbindungseinrichtung (44, 50 oder 86, 89) zum Herstellen einer Fernsprechverbindung zwischen dem Fernsprechgerät einerseits und dem Mikrophon und dem Lautsprecher der Sprecheinrichtung andererseits und eine durch eine Taste des Fernsprechgeräts aktivierte Betätigungseinrichtung (60, 66) zum Fernbetätigen des elektrischen Türöffners (70), so daß die Eingangstür geöffnet werden kann,
wobei dieses System dadurch gekennzeichnet ist, daß die Sprecheinrichtung außerdem eine Bildaufnahmevorrichtung (94) besitzt, die an den Peritel-Anschluß (96) eines im Inneren der Wohnung befindlichen Fernsehgeräts (98) angeschlossen ist, so daß das Bild eines auf den Rufknopf drückenden Besuchers automatisch auf dem Bildschirm des Fernsehgeräts angezeigt wird, nachdem die Steuervorrichtung nach Erfassung des Eindrückens des Rufknopfs die Umschaltung des Fernsehgeräts auf den Peritel-Anschluß vorgenommen und die Verbindung zwischen dem Fernsprechgerät und der Sprecheinrichtung hergestellt hat.

2. Steuersystem nach Anspruch 1, dadurch gekennzeichnet, daß die Steuervorrichtung (10) eine Wartesignalausstrahlungseinrichtung (74) vom Typ Musikausstrahlungseinrichtung aufweist, die an die Fernsprechleitung über einen Warteschalter (72) angeschlossen ist, dessen Schließung auf das Eindrücken des Rufknopfs (32) der Tür hin aktiviert wird, so daß ein ggf. vorhandener Fernsprechpartner während der Türöffnungsoperationen in den Wartezustand geschaltet wird.

3. Steuersystem nach Anspruch 1 oder 2, dadurch gekennzeichnet, daß das Fernsprechgerät ein tragbares Fernsprechgerät (22) ist, so daß die Türöffnungsoperationen von ferne ohne Ortsveränderung, d.h. also in Reichweite jedes motorisch Behinderten, durchgeführt werden können.

4. Steuersystem nach einem der Ansprüche 1 bis 3, dadurch gekennzeichnet, daß das Fernsprechgerät (18 oder 48) eine Taste aufweist, die betätigt werden kann, um die Verbindung mit der Fernsprechleitung wieder herzustellen, falls diese im Wartezustand war.

5. Steuersystem nach einem der Ansprüche 1 bis 4, dadurch gekennzeichnet, daß die Steuervorrichtung (10) an eine äußere Fernsprechleitung (16, 46) angeschlossen ist und einen Leitungsumschalter (44) mit zwei Stellungen aufweist, einer ersten sog. Ruhestellung, die die Verbindung zwischen der Fernsprechleitung und mindestens einem Fernsprechgerät (48) herstellt, und einer zweiten Stellung, die die Verbindung zwischen der Sprecheinrichtung (14) und dem Fernsprechgerät herstellt, wobei diese zweite Stellung als Reaktion auf die Erfassung des Eindrückens des Rufknopfs (32) der Sprecheinrichtung aktiviert wird.

6. System nach Anspruch 1 bis 4, dadurch gekennzeichnet, daß die Steuervorrichtung (10) einen Mikroprozessor (80) aufweist, in dem eine Anrufumleitnummer gespeichert ist, so daß der Mikroprozessor, wenn der Rufknopf (32) eingedrückt ist, mit Hilfe der Umschalteinrichtung (86, 89) die Verbindung der Sprecheinrichtung (14) mit der Leitung (46) des Fernsprechnetzes herstellt.

7. System nach Anspruch 6, dadurch gekennzeichnet, daß die Speicherung der Anrufumleitnummer von dem Fernsprechgerät (48) aus durch die Verbindung dieses Fernsprechgeräts mit dem Mikroprozessor (80) während einer bestimmten Zeit beim Abheben dieses Geräts vorgenommen wird.
